# EUROPEAN PATENT APPLICATION

(11) **EP 1 803 744 A1**
(43) Date of publication of application: **04.07.2007**
(21) Application number: 05078014.7
(22) Date of filing: 22.12.2005
(51) Int. Cl.: C08F 4/76, C08F 10/00, C07F 7/28

(54) **Zwitterionic guanidine catalyst**

(71) Applicant: DSM IP Assets B.V., 6411 TE Heerlen (NL)
(72) Inventor: Zuideveld, Martin Alexander, 6229 GD Maastricht (NL); Ijpeij, Edwin Gerard, 6136 JN Sittard (NL); Doremaele, Van Gerardus Henricus Josephus, 6132 HN Sittard (NL); Arts, Henricus Johannes, 6151 JD Mustergeleen (NL)
(74) Representative: Mooij, Johannes Jacobus

(57) **Abstract**

The invention relates to metal-organic compound according to formula (1), 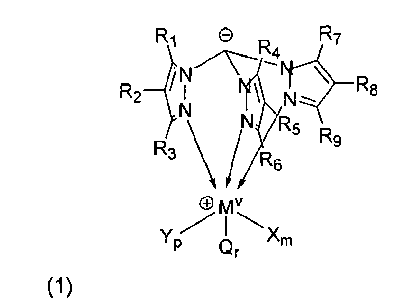 Wherein M is a group 4 metal with valency v, with v is 3 or 4, preferably Ti, Yₚ is a monoanionic guanidine ligands with p ≥ 1, Xₘ is an anionic ligand with m = ≥ 1, with m = v - p - 1, being the number of anionic ligands and Qᵣ is a coordinating ligand being a Lewis base with r ≥ 0 being the number of ligands, and R¹, R², R³, R⁴, R⁵, R⁶, R⁷, R⁸ and R⁹ can independently be chosen from hydrogen atoms, optionally substituted alkyl or aryl groups having 1 to 20 carbon atoms.

The invention further relates to the use of the compound according to Formula (1) as a catalyst for the preparation of polyolefins.

## Description

The invention relates to a metal-organic compound and in particular to a metal-organic compound that can be used as a catalyst in the production of a polyolefin. Processes for the production of polyolefins typically employ a catalyst system comprising a metal-organic complex of a group 4 metal and an activator. Activators for single-site catalysts are fairly well known in the art. These activators often comprise a group 13 atom, such as boron or aluminum. Examples of these activators are described in Chem. Rev., 2000, 100, 1391 by E. Y-X. Chen and T.J. Marks. A preferred activator is a borane, or a borate anion or an alkylaluminoxane (e.g. methylaluminoxane (MAO)). However, alkylaluminoxane activators suffer from the disadvantage that these compounds have to be used in large excesses.

Borane or borate anion comprising activators require fluorine substitution for reasons of (i) polarisability of the anion and (ii) the stability of the anion as described in EP 0 277 004 A1. However the borate anion ligand may easily transfer one of its substituents to the strongly electrophilic metal cation, which deactivates the catalyst. E.g. a C₆F₅⁻ group may transfer to the electrophilic metal cation, thus deactivating the catalyst.

In order to avoid the use of a co-catalyst, the synthesis of a compound containing a group 4 metal and a borate functionality in one molecule was described e.g. by Bochmann et al. (Organometallics, 2001, 2093). He describes the synthesis of compounds containing a catalyst comprising a group 4 metal in which the borate anion is part of the ligand structure, which is often referred to as zwitterionic, since the cation and the anion are linked in one molecule. These compounds however exhibit only moderate activity for polymerization of olefins.

Another disadvantage of the catalyst of Bochmann is its elaborate synthesis. The elaborate synthesis makes the catalyst expensive. A further disadvantage is the high fluorine content of these compounds, which requires the use of potentially explosive and expensive reagents for the synthesis of such compounds and leads to a high molecular weight catalyst system, which again increases catalyst costs.

It is an object of the invention to provide a catalyst system that does not require a cocatalyst, but is easier to synthesize than the catalyst described by Bochmann.

This object is achieved by a metal-organic compound according to Formula (1), 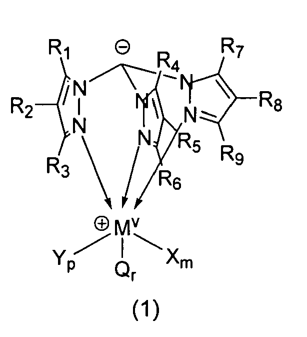 Wherein:
M is a group 4 metal with valency v being 3 or 4, preferably Ti
Yₚ is a monoanionic guanidine ligand with p ≥ 1 being the number of guanidine ligands,
Xₘ is an anionic ligand with m = ≥ 1 and m = v - p -1 being the number of anionic ligands and
Qᵣ is a coordinating ligand being a Lewis base with r ≥ 0 being the number of ligands. wherein:
R¹, R², R³, R⁴, R⁵, R⁶, R⁷, R⁸ and R⁹ can independently be chosen from hydrogen and, optionally substituted, hydrocarbyl groups having 1 to 20 carbon atoms.

The metal-organic compound according to Formula (1) provides a catalyst, which does not require a cocatalyst, and can be prepared easier and safer than the catalyst described by Bochmann et al. JP 11 22 86 14 describes a catalyst for the polymerization of an olefin which is composed of (A) a transition metal compound of the formula RB(Pr)₃M(Q)XLₙ (e.g. t-butylimidochlorotitanium(pyridine)hydrotrispyrazolylborate) and (B) a cocatalyst selected from the group consisting of organoaluminumoxy compound, Lewis acid compounds (e.g. triphenyl borane) and ionic compounds. This catalyst still requires a cocatalyst in the form of organic aluminium oxy-compound, a Lewis acid compound or ion forming compound to form cationic complexes in a reaction with the transition metal compound. In the case of Al compounds as cocatalyst, the Al/transition metal atom ratio is preferably 5 to 1000.

In the catalyst of JP 11228614 the borate anion ligand comprises four substituents, which makes that the anion is sterically hindered.

However the borate anion ligand may easily transfer one of its substituents to the strongly electrophilic Ti cation, which deactivates the catalyst.

Surprisingly we have found that a metal-organic compound, wherein the negatively charged boron atom is replaced by a carbanion and the group 4 metal is substituted with a guanidine ligand provides an active catalyst in olefin polymerisation.

The fact that in the reaction between tris(pyrazolyl)methane and a Ti cation results in a stabilised, naked *sp³*-hybridized carbanion can be derived from Sally C Lawrence et al in Chem. Commun, 2001, 705-706. However, as opposed to the sterically hindered hydrotrispyrazolylborate ligands described in JP 11228614, it could not be foreseen that this sterically free carbanion would not coordinate strongly to the Ti cation, thus preventing the coordination of olefins necessary for a polymerisation process.

In the metal-organic compound of the invention the guanidine ligand Y is represented by Formula 2: 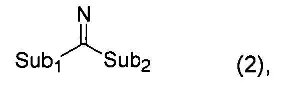 wherein each of Sub¹ and Sub² is independently a (substituted) amido radical and wherein Sub¹ and Sub² may be linked with each other to form a ring system.

The guanidine ligand is covalently bonded to the metal M via the imine nitrogen atom. This means that the imine nitrogen atom of the imine ligand does not have any substituents but the imine carbon atom.

In the metal-organic compound of the invention Xₘ is an anionic ligand with m ≥ 1, being the number of anionic ligands. Each anionic ligand, X, bonded to M, may be independently selected from the group consisting of hydride, halide, alkyl, silyl, germyl, aryl, amide, aryloxy, alkoxy, phosphide, sulfide, acyl, pseudo halides such as cyanide, azide, and acetylacetonate, or a combination thereof. Preferably, X is a hydride or a moiety selected from the group consisting of monoanionic spectator ligands, halide, alkyl, aryl, silyl, germyl, aryloxy, alkoxy, amide, siloxy and combinations thereof (e.g. alkaryl, aralkyl, silyl substituted alkyl, silyl substituted aryl, aryloxyalkyl, aryloxyaryl, alkoxyalkyl, alkoxyaryl, amidoalkyl, amidoaryl, siloxyalkyl, siloxyaryl, amidosiloxyalkyl, haloalkyl, haloaryl, etc.) having up to 20 non-hydrogen atoms.

Preferred anionic ligands X include halides and hydrocarbyl anions. A preferred halide is chloride. In one embodiment of the invention hydrocarbyl groups are anionically charged hydrocarbyl groups. In addition to the usual definition of a hydrocarbyl group, in this application a hydrocarbyl group also comprises a hydride group. The hydrocarbyl groups optionally contain heteroatoms of group 13-17. Preferred hydrocarbyl groups include hydride, alkyl-, aryl-, aralkyl-, alkaryl-, substituted vinyl- and substituted allylgroups. More preferred hydrocarbyl groups include hydride, alkyl-, aryl-, aralkyl- and alkaryl groups. Most preferred hydrocarbyl groups include alkyl-, aryl-, aralkyl- and alkaryl groups. Examples of such most preferred hydrocarbyl groups are methyl, benzyl, methyltrimethylsilyl, phenyl, methoxyphenyl, dimethoxyphenyl, N,N-dimethylaminophenyl, bis (N,N-dimethylamino)phenyl, fluorophenyl, difluorophenyl, trifluorophenyl, tetrafluoropheny, perfluorophenyl, trialkylsilylphenyl, bis(trialkylsilyl)phenyl, tris(trialkylsilyl)phenyl and the like.

In the metal-organic compound of the invention Qᵣ is a coordinating ligand being a Lewis base with r ≥ 0 being the number of ligands. The ligand Q may be present in the metal-organic compound for reasons of stability. If the ligand Q is present, Q is an ether, a thioether, a tertiary amine, a tertiary phosphane, an imine, or a bi-, or oligodentate, comprising an ether, a thioether, a tertiary amine, or a tertiary phosphane functional group, or combinations thereof.

Suitable ethers are tetrahydrofuran and diethylether. Suitable thioethers are thiophene, diethylsulfide, and dimethylsulfide. Suitable tertiary amines are trialkylamines, pyridine, bipyridine, TMEDA, and (-)-sparteine). Suitable tertiary phosphanes are triphenylphoshine, trialkylphosphanes. Suitable of imines are ketimines, guanidines, iminoimidazolidines, phosphinimines, amidines and the like. Suitable bidentate ligands are diimines, alkyl or aryldiphoshanes, dimethoxyethane. Suitable oligodentate ligands are triimines (such as tris(pyrazolyl)alkanes), cyclic multidentate ligands comprising heteroatoms of group 13-17, including crown ethers optionally having heteroatoms of group 13-17, azo-crown ethers optionally having heteroatoms of group 13-17, phospha-crown ethers optionally having heteroatoms of group 13-17, crown ethers having combinations of heteroatoms of group 15-16 optionally having heteroatoms of group 13-17 and crown ethers containing heteroatoms of group 14-17 or combinations thereof.

The number of ligands (X and Q) depends on the valency of the metal and the stability of the metal-organic compound. The metal-organic compound may be monomeric, oligomeric or a cluster. The number of anionic ligands equals the valency of the metal used. The number of neutral ligands on the metal-organic reagent may range from 0 up to the amount that satisfies the 18-electron rule, as known in the art.

In the metal-organic compound of the invention the substitutes R¹, R², R³, R⁴, R⁵, R⁶, R⁷, R⁸ and R⁹ can independently be chosen from hydrogen atoms and optionally substituted hydrocarbyl groups. Optionally the different R groups may form ring structures with each other. Examples of hydrocarbyl groups include methyl, ethyl, propyl, isopropyl, butyl and its isomers and C₅-C₂₀ alkyl groups including isomers, and aromatic hydrocarbyl groups. Examples of aromatic hydrocarbyl groups include phenyl, benzyl, biaryl, biphenyl, binaphyl and those substituted with an alkyl group as described above. Examples of optionally substited hydrocarbyl groups are alkyl or aryl groups having 1 to 20 carbon atoms as described above, optionally comprising one or more heteroatoms selected from group13-17 of the periodic table. Preferably, when the substituents R¹, R², R³, R⁴, R⁵, R⁶, R⁷, R⁸ and R⁹ comprise a heteroatom the substituents R¹, R², R³, R⁴, R⁵, R⁶, R⁷, R⁸ and R⁹ are substituents comprising a heteroatom of group 15-16. Preferably this atom is selected from the group of nitrogen, phosphorus, oxygen or sulfur. Examples of such groups include amide, imide, phosphide, phospinimide, oxide, sulphide radical, optionally substituted with hydrocarbyl radicals or silyl radicals. Examples of such heteroatom comprising groups include trihydrocarbylsilyl groups such as trimethylsilyl, triethylsilyl, tripropylsilyl including isomers, tributylsilyl including isomers, C₅-C₂₀ alkylsilyl groups including isomers, optionally substituted with groups comprising a heteroatom of group 13-17 of the periodic table, triphenylsilyl, tribenzyl, trinaphtylsilyl, tribiphenylsilyl, and silyl groups having both alkyl and aryl substituents, hydrocarbyltrihydrocarbylsilyl, phenyl, methoxy, ethoxy, propoxy, isopropoxy, butoxy, C₅-C₂₀ alkoxy groups including isomers, phenoxy, benzyloxy, naphtoxy, biphenoxy, optionally substituted with groups comprising a heteroatom of group 13-17 of the periodic table including its isomers, methylsulphide, ethylsulphide, propylsulphide, isopropylsuphide, butylsuphide, C₅-C₂₀ sulphide groups including isomers, phenylsulphide, benzylsulphide, naphtylsulphide, biphenylsulphide, optionally substituted with groups comprising a heteroatom of group 13-17 of the periodic table including its isomers, dimethylamido, diethylamido, dipropylamido, diisopropylamido, dibutylamido including its isomers, C₅-C₂₀ diamido groups including isomers, diphenylamido, dibenzylamido, dinaphtylamido, dibiphenylamido, optionally substituted with groups comprising a heteroatom of group 13-17 of the periodic table including its isomers, hydrocarbyloxyaryl, methoxyphenyl, dimethoxyphenyl, phenoxyphenyl naphtoxyphenyl, biphenyloxyphenyl, thiohydrocarbylaryl, thioaryl, thioanisole, N,N-dihydrocarbylamidoaryl, N,N-dimethylaminophenyl, bis (N,N-dimethylamino)phenyl, trialkylsilylphenyl, bis(trialkylsilyl)phenyl, tris(trialkylsilyl)phenyl and the like.

The catalyst of the present invention can be prepared in a three-step process.
In a first step, a metal-organic precursor of formula (3):

M^{v}XₐQᵣ (3)

wherein:
M represents a group 4 metal with valency v being 3 or 4
a represents the number of the ligands X, with a ≥ 3
r represents the number of the ligands Q, with r representing an integer ≥ 0, is contacted with b equivalents of a guanidine ligand Y or the HB adduct of a guanidine in the presence of a base. HB represents an acid, of which H represents its proton and B its conjugate base.
This results in a metal-organic first intermediate of formula (4):

M^{v}X_{(a-b)}QᵣY_{b} (4),

wherein
b represents the number of guanidine ligands Y, with b = 1 or 2,

In a second step the thus formed first intermediate of Formula (4) is contacted with a tris(pyrazolyl)methane according to formula (5): 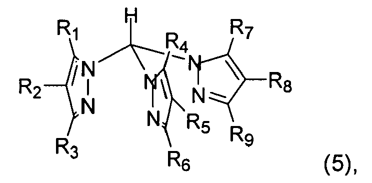 resulting in an second intermediate according to formula (6).

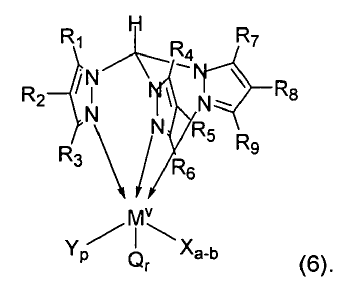

This second intermediate is contacted in a third step with a hydrocarbylating agent to the Zwitterionic metal-organic compound of formula 1.

The order wherein the guanidine ligand and the tris(pyrazolyl)methane are added to the metal-organic precursor may be interchanged. This results in a process wherein the metal-organic precursor is first reacted with the tris(pyrazolyl)methane, which results in a metal-organic third intermediate of Formula (7) 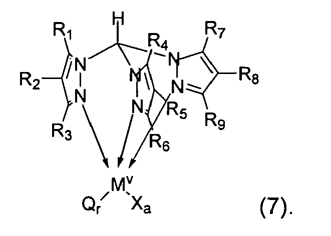 In a second step this third intermediate is contacted with b equivalents of a guanidine ligand or the HB adduct of a guanidine in the presence of a base, which results in the second intermediate according to Formula (6). This second intermediate is again contacted in a third step with a hydrocarbylating agent to the Zwitterionic metal-organic compound of formula (1).

If the process is carried out with a guanidine according to formula (8), or its HB adduct, 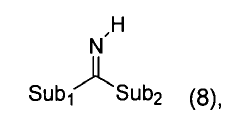 wherein Sub₁ and Sub₂ are groups as described above, the process is carried out in the presence of at least 1 equivalent of a base with respect to the metal-organic reagent.

If the process is carried out with the HB adduct of a guanidine-containing ligand according to formula (8), the process has to be carried out in the presence of at least two equivalents of a base.

Methods for the preparation of guanidine ligands and the metal salt thereof are well known in the art.

Some non-limiting examples of the conjugated base B of HB are halides, such as fluoride, chloride, bromide, or iodide, sulfate, hydrogen sulfate, phosphate, hydrogen phosphate, dihydrogen phosphate, carbonate, hydrogen carbonate, aromatic or aliphatic carboxylates, cyanide, tetrafluoroborate, (substituted) tetraphenylborates, fluorinated tetraarylborates, alkyl or aryl sulfonates.

The reaction with the guanidine is carried out in the presence of a base.
Suitable bases include amines, phosphanes, carboxylates (for example potassium acetate), fluorides, hydroxides, cyanides, amides and carbonates of Li, Na, K, Rb, Cs, ammonium and the group 2 metals Mg, Ca, and Ba, the alkali metal (Li, Na, K, Rb, Cs) phosphates and the phosphate esters (e.g. C₆H₅OP(O)(ONa)₂ and related aryl and alkyl compounds) and their alkoxides and phenoxides, thallium hydroxide, alkylammonium hydroxides and fluorides. Some of these bases may be used in conjunction with a phase transfer reagent, such as tetraalkylammonium salts or crown ethers. Stronger bases may also be applied, for example carbanions such as hydrocarbanions and hydrides of group 1, group 2, group 12 or group 13 elements. The alkalimetals of group 1 may also be applied as a base. If the spectator ligand is a diacidic spectator ligand, at least two equivalents of a base are required.

Preferred bases include amines, organolithium compounds, or organomagnesium compounds, alkali metals, group 1 hydrides or group 2 hydrides. More preferred bases are mono-, di-, or trialkylamines or aromatic amines, organolithium compounds, organomagnesium compounds, sodium hydride or calcium hydride. In this application, aromatic amines are understood to be compounds having a nitrogen atom in an aromatic ring system or mono-, di-, or triarylamines.

Even more preferred bases are triethylamine, pyridine, tripropylamine, tributylamine, 1,4-diaza-bicyclo[2.2.2]octane, pyrrolidine or piperidine organolithium compounds, or organomagnesium compounds. Examples of organomagnesium compounds are methylmagnesium halides, phenylmagnesium halides, benzylmagnesium halides, biphenylmagnesium halides, naphthylmagnesium halides, tolylmagnesium halides, xylylmagnesium halides, mesitylmagnesium halides, dimethylresorcinolmagnesium halides, N,N-dimethylanilinemagnesium halides, dimethylmagnesium, diphenylmagnesium, dibenzylmagnesium, bis(biphenyl)magnesium, dinaphtylmagnesium, ditolylmagnesium, dixylylmagnesium, dimesitylmagnesium, bis(dimethylresorcinol)magnesium and bis(N,N-dimethylaniline)magnesium.

Examples of organolithium compounds are methyllithium, phenyllithium, benzyllithium, biphenyllithium, naphthyllithium, lithio-dimethylresorcinol and lithio-N,N-dimethylaniline.

In the processes described above the addition of a guanidine ligand or the HB adduct of a guanidine in the presence of a base to either the metal-organic precursor or the first intermediate of Formula (4) can be replaced by the addition of a metal salt of a guanidine according to formula (9). 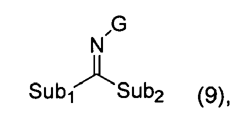 wherein Sub₁ and Sub₂ are groups as described above, and G is a group comprising a metal of group 1, 2, or 13 or a group comprising Si, Ge, Sn or Pb. If G represents a group with a metal of group 1, group G may further contain Lewis basic ligands as defined for L. If group G contains a metal of group 2, the group G contains a second anionic ligand. This anionic ligand may be another negatively charged guanidine ligand or an anionic ligand as defined for X. If the group G contains an atom of group 13, this atom can further be substituted with two groups which each can be either a guanidine-containing ligand or an anionic group as defined for X, or combinations thereof. If group G comprises an atom chosen from the series of Si, Ge, Sn or Pb, this atom can be substituted with three hydrocarbyl groups, optionally containing at least one hetero atom of group 13 - 17. The advantage of the HB adduct of the guanidine-containing ligand is that its stability towards hydrolysis is significantly higher than for the metal salt of formula (9) or the guanidine of formula (8).

If the metal-organic compound according to formula (1) comprises one or more halogen as anionic ligand X at least one has to be replaced in the third step by a hydrocarbyl group before becoming an active catalyst. The process for the preparation of the metal-organic compound is therefore optionally carried out in the presence of a hydrocarbylating agent. The hydrocarbylation process may be conducted in-situ in the polymerisation process. In this application, hydrocarbylating agents are understood to be nucleophilic groups comprising a metal-, or a metalloid-carbon or hydride bond. Suitable hydrocarbylating agents are: tri-, or tetrahydrocarbyl boron, tri-, or tetrahydrocarbyl aluminium, tri-, or tetrahydrocarbyl gallium, tri-, or tetrahydrocarbyl indium and di-, or tetrahydrocarbyl tin, or the reaction products of these hydrocarbylating agents with sterically hindered alcohols, thiols, amines or phosphanes.

Preferably the hydrocarbylating agent comprises a metal or a metalloid chosen from group 1, 2, 11, 12, 13 or 14. Examples of hydrides from metals or metalloids of group 1, 2, 11, 12, 13, 14 include: lithium hydride, sodium hydride, potassium hydride, calcium hydride, magnesium hydride, copper hydride, zinc hydride, cadmium hydride, borane, aluminium hydride, gallium hydride, silicon hydride, germanium hydride, and tin hydride.
More preferably the hydrocarbylating agent comprises Li, Mg, Zn, or Al.

Examples of Li comprising hydrocarbylating agents are methyllithium, phenyllithium, benzyllithium, biphenyllithium, naphtyllithium, lithio-dimethylresorcinol, and lithio-N,N-dimethylaniline.

Examples of magnesium comprising hydrocarbylating agents are methylmagnesiumhalide, phenylmagnesiumhalide, benzylmagnesiumhalide, biphenylmagnesiumhalide, naphtylmagnesiumhalide, tolylmagnesiumhalide, xylylmagnesiumhalide, mesitylmagnesiumhalide, dimethylresorcinolmagnesiumhalide, N,N-dimethylanilinemagnesiumhalide, dimethylmagnesium, diphenylmagnesium, dibenzylmagnesium, (biphenylene)magnesium, dinaphtylmagnesium, ditolylmagnesium, dixylylmagnesium, dimesitylmagnesium, bis(dimethylresorcinol)magnesium, and bis(N,N-dimethylaniline)magnesium.

Examples of aluminium comprising hydrocarbylating agents are compound containing one or more Al-O, Al-N or Al-P bonds, diisobutylaluminium hydride, C₁-C₂₀ trihydrocarbyl aluminium, and hydrocarbylaluminoxanes. A highly preferred compound is triisobutylaluminum.

The invention further relates to the use of the metal-organic compound according to the invention as catalyst for the preparation of polyolefins.

The process for the preparation of a polymer according to the invention is preferably carried out in a solvent. Suitable solvents or diluents include, but are not necessarily limited to, straight and branched-chain hydrocarbons such as C₆- C₁₂ alkanes (e.g. hexane, heptane, pentamethyl heptane (PMH)); C₆- C₁₂ cyclic and alicyclic hydrocarbons such as cyclohexane, cycloheptane, methylcyclohexane; C₆ - C₁₂ aromatic and alkyl-substituted aromatic compounds such as benzene, toluene and xylene, and mixtures of the previous solvents or diluents. Compounds removing deactivating impurities from the solvent or the monomers may preferably added.

The complexes may be employed as homogeneous catalysts or supported on the surface of a suitable support such as alumina or silica for the preparation of polyolefins.

Such a polymerization can be conducted at a pressure ranging from 0.1 MPa to 10 MPa, preferably from 0.1 to 1 MPa.

## Claims

1. Metal-organic compound according to formula (1), 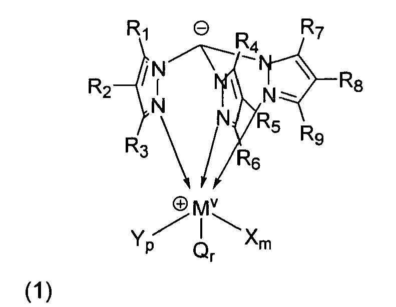 Wherein:
M is a group 4 metal with valency v, with v is 3 or 4, preferably Ti
Yₚ is a monoanionic guanidine ligand with p being the number of guanidine ligands;
Xₘ is an anionic ligand with m = ≥ 1, and m = v - p - 1, being the number of anionic ligands and
Qᵣ is a coordinating ligand being a Lewis base with r ≥ 0 being the number of ligands, and R¹, R², R³, R⁴, R⁵, R⁶, R⁷, R⁸ and R⁹ can independently be chosen from hydrogen atoms, optionally substituted alkyl or aryl groups having 1 to 20 carbon atoms.

2. A heterogeneous catalyst comprising the metal-organic compound according to claim 1.

3. Use of the metal-organic compound according to claim 1 as a homogeneous catalyst, or the heterogeneous catalyst according to claim 2 as catalyst for the preparation of polyolefins.
